# EUROPÄISCHE PATENTSCHRIFT

(11) **EP 0 979 902 B1**
(45) Veröffentlichungstag und Bekanntmachung des Hinweises auf die Patenterteilung: **15.12.2004**
(21) Anmeldenummer: 98810768.6
(22) Anmeldetag: 11.08.1998
(51) Int. Cl.: E03B 3/06

(54) **Brunnenstube, und Absetzbecken für eine Brunnenstube**
Well water collection chamber and sedimentation tank therefor
Chambre à eau de puits et bassin de décantation de cette chambre

(43) Veröffentlichungstag der Anmeldung: 16.02.2000
(73) Patentinhaber: Lippuner, Uli, 7320 Sargans (CH)
(72) Erfinder: Lippuner, Uli, 7320 Sargans (CH)
(74) Vertreter: Riederer, Conrad A., Dr.

(56) Entgegenhaltungen:
- EP-A- 0 311 763
- DE-A- 2 603 426
- DE-A- 2 856 843
- DE-C- 4 226 871
- GB-A- 463 285
- GB-A- 925 993
- US-A- 3 397 788
- US-A- 5 453 197
- US-A- 5 549 827
- US-A- 5 624 580
- 'Richtlinien fuer Projektierung, Ausfuehrung und Betrieb von Quellfassungen', 1989, SVGW, ZUERICH

## Beschreibung

### Technisches Gebiet der Erfindung

Die Erfindung betrifft eine Brunnenstube, sowie eine Verwendung eines Absetzbeckens.

### Stand der Technik

Aus der GB-A-463,285 ist ein Gerät bekannt, das zur Entfernung von Staub aus Wasser dient, welches Wasser zum Waschen oder Aufbereiten von Luft benutzt wurde. Das Gerät ist ein geschlossenes Druckgefäss mit einer sogenannten Vortex-Kammer darin. Ein oberer Kragen der Vortexkammer öffnet in den oberen Bereich des Druckgefässes. Die Basis der Vortexkammer entlässt die Verunreinigungen zum Boden des Druckgefässes hin. Der Klarwasserauslass ist auf der Saugseite einer Pumpe angeordnet. Die Saugwirkung zieht das zu behandelnde Wasser durch eine kreisförmige Leitung um den Kragen herum und in die Vortexkammer.

Aus der EP 0 311 763 ist ein Sedimentationsbehälter für die Wasser- und Abwasserreinigung bekannt. Der Behälter enthält einen konischen Schrägboden mit einem umlaufenden Rührwerk und einem zentralen Sedimentabzug. Im oberen Bereich sind aufwärts durchströmte Schrägplattenabscheider vorhanden. Eine Überlaufrinne legt den Wasserstand im Behälter über den Schrägplattenabscheidern fest. Der Zulauf ist tangential im oberen Bereich unterhalb der Schrägplattenabscheider angeordnet. Unterhalb der Schrägplattenabscheider erstreckt sich ein Leitrohr von der Behälterwand mit nach unten abnehmendem Durchmesser zum Räumwerk hin und endet über dem Räumwerk. Dieses Leitrohr wird von oben nach unten umströmt und von unten nach oben durchströmt. Dieser Behälter besitzt eine mit einer Entlüftung versehene Abdeckung.

Diese beiden Vorrichtungen benötigen einen Vollrohranschluss auf der Zuleitungsseite. Sie sind daher nicht geeignet als Absetzbecken für das Wasser eines Quellzulaufs, da ein Quellzulauf auch Luft von der Quellfassung her mitführt.

Aus den Richtlinien für Projektierung , Ausführung und Betrieb von Quellfassungen, W 10, 1989, des Schweizerischen Vereins des Gas- und Wasserfaches (SVGW) sind vorbildliche Brunnenstuben und Absetzbecken für Quellfassungen bekannt wobei die Brunnerstuben die Merkmale der Oberbegriffs der Anspruchs 1 aufweisen.

Quellwasser wird in einer Quellfassung gefasst. Diese ist darauf ausgelegt, dass das Quellwasser von Oberflächenwasser getrennt bleibt. In Brunnenstuben fliesst das in der Quellfassung gefasste Quellwasser erstmals zutage. Die Brunnenstube dient der Qualitätssicherung und -kontrolle durch Verhinderung der Zugänglichkeit des Quellwassers für Unberechtigte, Trübungsmessungen, Ertrags- und Temperaturmessungen sowie Kontrollgängen und Probeentnahmen. In einem Absetzbecken, in der Regel mit Tauchwand, werden Fest- bzw. Schwebestoffe zurückbehalten, bevor das Quellwasser in die nächstgrössere Brunnenstube oder ins Reservoir abfliesst. Notfalls kann trübes Wasser durch Ziehen des Strümpfel direkt einem Gewässer, dem sogenannten Vorfluter zugeleitet werden.

Brunnenstuben werden je nach Grösse, d.h. je nach Anzahl der zufliessenden Quellen und ihren Ertragsmengen, in Ortbeton oder mit vorfabrizierten Elementen ausgeführt. Vorfabrizierte Brunnenstuben gibt es aus Betonrohren, Faserzement und aus Kunststoff, wie Polyethylen oder glasfaserverstärktem Polyester usw.

Eine Brunnenstube besteht aus einer wasserdichten Gebäudehülle. Die Bodenfläche der Brunnenstube ist mit Trennwänden in ein oder mehrere Absetzbecken und einen Trockenraum unterteilt. Ein Zugang zur Brunnenstube ist über dem Trockenraum oder in einer an den Trockenraum angrenzenden Wand der Gebäudehülle angeordnet.

Die Absetzbecken sind mit einer Tauchwand oder einer Lochwand unterteilt. Die Tauchwand kann auch gelocht sein. Das Quellwasser fliesst in das erste Abteil des Absetzbeckens, unter der Tauchwand oder durch die Löcher in der Lochwand hindurch und steigt dann im zweiten Abteil auf, um z.B. über einen geeichten Messüberfall oder durch eine mit Seiher versehene Trinkwasserleitung aus dem Absetzbecken auszufliessen. Durch die Tauchwand wird eine Beruhigung des Wassers erreicht. Die möglichen Schwebestoffe setzen sich dank der insbesondere im zweiten Abteil erreichten Verminderung der Turbulenzen ab. Bei mehreren Absetzbecken werden die Ausläufe in einem Sammelbecken gesammelt und vom Sammelbecken das Quellwasser in der Regel mit einer Freispiegelleitung einem Trinkwasserreservoir zugeführt.

Absetzbecken und Sammelbecken sind offene Wasserbecken mit einem Strümpfel, in der Art eines Brunnentroges. Der Strümpfel dient als Überlauf und kann zur Entleerung des Beckens gezogen werden. Zur Reinigung des Wasserbeckens wird der Strümpfel gezogen, das Wasser im Becken über eine mit einem Sammelschacht siphonierten Ableitung in den Vorfluter abgeleitet und die Beckenwandung allenfalls mit Reinigungsund Desinfektionsmitteln geschrubbt. Von Zeit zu Zeit muss auch der im Sammelschacht angefallene Sediment entfernt werden. Im Boden des Trockenraumes ist dazu ein Deckel zum Sammelschacht vorgesehen. Wasser im Trockenraum fliesst durch einen gelochten Deckel in den Sammelschacht. Im Trockenraum kann alternativ dazu auch ein siphonierter Bodenablauf vorgesehen sein, wobei dann die Entleerungsleitung des Absetzbeckens mit einem Siphon direkt an die Ableitung angeschlossen ist.

Die Brunnenstube ist entlüftet. Damit möglichst keine Verunreinigungen ins Quellwasser gelangen, ist die Entlüftung mit Insektengittern und Staubfiltern gesichert, so dass möglichst weder Kleintiere noch Pflanzenteile oder andere Partikel in die Brunnenstube eindringen können. Zur Sicherung gegen böswillige Übergriffe, wie Sabotage, ist der Zugang mit Schlössern gegen den Zutritt Unberechtigter gesichert und der Deckel oder die Türe mit Gummidichtungen versehen.

Nachteilig an herkömmlichen Brunnenstuben ist, dass die Wasserqualität durch eine undichte Stelle in der Gebäudehülle bedroht ist. Weiter sind die Becken je nach Anzahl und Ertragsmenge der in der Brunnenstube zusammenlaufenden Quellen bei jeder neu zu erstellenden Brunnenstube individuell einzurichten. Dabei ist auf die Anordnung der Quellzuläufe und der Ableitung zu achten. Brunnenstuben mit einem Sammelbecken weisen in der Regel einen Höhenunterschied zwischen Quellzulauf und Quellableitung von etwa 50 bis 80 cm auf, wobei 30 cm kaum unterschritten werden können. Ist der Einstieg in die Brunnenstube über einen Schacht von oben vorgesehen und vorschriftsgemäss über einem Trockenraum angeordnet, so ist dennoch nicht auszuschliessen, dass z.B. Erde von den Schuhsohlen des Brunnenmeisters durch eine Bewegung des Schuhs beschleunigt abfällt und ins Trinkwasser gerät. Auch kann Laub, Mist oder dergleichen, welches um den Deckel herum vorliegt oder am Deckel klebt, beim Öffnen des Deckels in die Brunnenstube gelangen und das Wasser verunreinigen.

Bei einem defekten Wasserbecken, z.B. einer undichten Stelle in der Beckenwandung oder bei unhygienischer Verhältnissen (Wasserwürmer, Moosbildung, Tauschnecken, Spinnen, Fliegen, Schleim, Algen, Pilzbefall, Verkrustungen) muss der Brunnenmeister die Quelle für die Dauer der vor Ort auszuführenden Reparatur- und Reinigungsarbeiten in den Vorfluter ableiten. Diese Arbeiten sind zudem meist an schlecht zugänglichem Ort auszuführen. Allenfalls muss in der Brunnenstube mit z.B. dichtenden Zusatzstoffen zu Beton, mit Harz und Härter für Kunststoff, mit Klebern, mit scharfen Reinigungsmittel oder gar mit Fungiziden oder dergleichen gearbeitet werden, während die weiteren Quellen weiterhin genutzt werden. Auch wird gerne mit schmutzigen, z.B. mit Öl verschmierten Werkzeugen gearbeitet.

Weiter sind die Bedingung bei der Erstellung einer Brunnenstube anzuführen. Da Quellfassungen und Brunnenstuben in der Nähe der Quelle erstellt werden müssen, sind sie meist abgelegen und schlecht zugänglich. Daher ist ihre Erstellung vor Ort im Vergleich mit einem gleich umfangreichen Bauvorhaben in erschlossener Umgebung deutlich teurer. Es muss auf der Baustelle oft Strom erzeugt werden, die Bestandteile und Baumaterialien z.T. gar mit Helikopter angeliefert werden. Dabei sind viele Brunnenstuben im Wald, so dass sogar der Zugang aus der Luft behindert ist und die Gefahr einer Beschädigung des Transportgutes gross ist. Die Schadenerkennung erfolgt oft viel später. Grabarbeiten sind, ob von Hand oder mit unter erschwerten Bedingungen hintransportierten Maschinen, sehr teuer.

### Aufgabe der Erfindung

Daher ist die Aufgabe der Erfindung, die aufgeführten Nachteile möglichst weitgehend zu überwinden. Insbesondere soll die Hygiene verbessert und die Wasserqualität gesichert werden. Weiter sollen die Reinigung der Becken vereinfacht und die Baukosten und die Kosten für die Instandsetzung wesentlicher Bauteile gesenkt werden.

### Beschreibung der Erfindung

Erfindungsgemäss wird diese Aufgabe durch die Merkmale des Patentanspruchs 1 bzw. 11 gelöst. Eine wesentliche Verbesserung der Sicherung der Wasserqualität wird dadurch erreicht, dass das Absetzbecken von der Umfassungswand der Gebäudehülle gelöst ist, so dass ein Luftraum um das Absetzbecken herum vorliegt. Dadurch ist nämlich ausgeschlossen, dass bei einer undichten Stelle durch die Gebäudehülle eindringendes Oberflächenwasser in das Trinkwasser gelangt. Solches die Trinkwasserqualität gefährdendes Wasser fliesst dadurch auf den Boden im Trockenraum und durch den siphonierten Bodenablauf in die Ableitung und dem Vorfluter zu.

Das Absetzbecken ist ein von der Gebäudehülle unabhängiges Einbauteil. Durch die Loslösung des Beckens von der Gebäudehülle ist es möglich geworden, das Absetzbecken als Normteil in verschiedenen Ausführungen seriell herzustellen und in die Brunnenstube als Fertigteil nach Erstellen der Gebäudehülle einzubauen. Ein Einbauteil hat auch den Vorteil, dass es für eine Revision aus der Brunnenstube herausgenommen werden kann und sofort durch ein revidiertes oder neues Absetzbecken ersetzt werden kann. Zudem kann ein solches Einbauteil aus einem leicht zu reinigenden und hygienischen Material wie rostfreiem Stahl, Keramik, Glas, PMMA (Akrylglas) oder anderem Kunststoff hergestellt werden. Ein solches Absetzbecken wird vorzugsweise auch bereits geeicht ausgeliefert. Vor Ort ist es lediglich zu versetzen und an die Leitungen anzuschliessen. Nichtmetallische Materialien haben dabei den Vorteil, dass keine galvanischen Wirkungen auftreten. Transparente Materialien weisen den Vorteil auf, dass eine Wassertrübung und eine Beckenverunreinigung sofort von aussen sichtbar sind. Um der Algenbildung entgegenzuwirken, muss die Brunnenstube dann jedoch absolut dunkel sein, oder dem Einbauteil einen Lichtschutzmantel umgehängt werden.

Ein solches Absetzbecken weist vorzugsweise einen Deckel und eine Entlüftung auf. Durch den Deckel ist das Wasser geschützt vor eindringenden Teilen. Selbst in die Brunnenstube eindringende Verunreinigungen wie Erde an den Schuhen des Brunnenmeisters, Blätter, Mist, Haare oder Kleiderfuseln, allfällige eingedrungene Schnecken oder Würmer, Käfer oder Larven und eingeblasener Blütenstaub etc. kann nicht in die Wasserversorgung gelangen. Das Wasser ist auch im Bereich mit freiem Wasserspiegel vollständig im Leitungs- und Behältersystem eingeschlossen. Dadurch wird auch der Trockeneinstieg unproblematisch. Das Trinkwasser ist optimal geschützt, da keine offene Wasserfläche mehr vorliegt.

Eine Entlüftung ist wegen von der Quellfassung her eindringender Luft und dem wegen unterschiedlicher Quellschüttung veränderlichen Wasserspiegel notwendig. Der Deckel kann zur Kontrolle oder Reinigung des Beckens abgehoben werden.

Vorzugsweise ist das Becken zylindrisch, da zylindrische Rohrstücke in beinahe jeder Dimension und jedem Material auf dem Markt sind und der Zylinder sehr geeignet ist, um Druckunterschiede von innen und aussen aufzunehmen. Runde Rohre weisen keine Ecken auf und sind daher besser reinigbar als eckige Behälter. Das Becken könnte abgesehen davon sehr wohl auch kantig sein. Es ist jedoch darauf zu achten, dass seine Masse kleiner sind als die Öffnung des Zuganges.

Vorteilhaft weist ein Absetzbecken einen trichterförmigen Boden mit dem Ablauf am tiefsten Punkt des Trichterbodens auf. Dadurch setzen sich Schwebeteilchen direkt über dem Ablauf ab und werden beim Öffnen durch das ausströmende Wasser mitgeschwemmt. Die Reinigung des Beckens ist dadurch wesentlich vereinfacht.

Wenn auch weiterhin ein Strümpfel vorgesehen werden kann, so wird dennoch ein Ventil oder Schieber an der Entleerungsleitung vorgezogen, um diese zu verschliessen oder zu öffnen. Zweckmässigerweise ist dann ein Überlauf am Absetzbecken vorgesehen. Die Überlaufleitung wird nach diesem Ventil oder Schieber in die siphonierte Ableitung eingeleitet. Ventile und Schieber sind auch automatisch über eine Steuerung bedienbar. Daher ist für den Verwurf der Quelle vorzugsweise an eine automatische Überwachung der Trübung des Wassers eine automatische Betätigung des Ventils gekoppelt.

Vorteilhaft ist ein Ventil oder Schieber zum Auslassen von Quellwasser aus dem Absetzbecken vorgesehen. Dadurch können der Quelleinlauf und die Wasseroberfläche des Beckens verdeckt sein und trotzdem Proben entnommen werden. Am Ventil oder Schieber können auch Wassermengenmessungen vorgenommen werden, wie auch durch Anschliessen eines Schlauches, die Brunnenstube gereinigt werden.

Vorteilhaft ist das Volumen des Beckens unter dem Ventil geeicht, so dass zur Wassermengenmessung das Becken entleert und anschliessend die Zeit bis das Wasser aus dem Ventil oder Schieber austritt gemessen werden muss. Dadurch kann eine "Eimermessung" ohne separaten Eimer durchgeführt werden.

Eine Tauchwand kann z.B. durch eine gerade Wand oder ein Wandkreuz, welche in das Becken hineingestellt ist, gebildet werden. Vorteilhaft wird die Tauchwand durch ein vertikales Rohr im Innern des Beckens gebildet. Dieses wird vorzugsweise so dimensioniert, dass das nach unten strömende turbulente Quellwasser eher rascher strömt als das aufsteigende. Dadurch gelangen deutlich weniger Schwebeteilchen in die Trinkwasserversorgung.

Vorteilhaft ist am Einlaufstutzen für das Quellwasser ein Rohrstutzen zum Anschluss eines Entnahmeröhrchens für Trübungsmessungen vorgesehen. Dies erleichtert die Einrichtung einer automatischen Überwachung der Wasserqualität.

### Kurzbeschrieb der Figuren

Es zeigt:
- Fig. 1: eine erfindungsgemässe Brunnenstube mit einer vorfabrizierten Gebäudehülle und einem darin angeordneten erfindungsgemässen Absetzbecken,
- Fig. 2: einen Grundriss der Brunnenstube gemäss Fig. 1,
- Fig. 3: die Brunnenstube gemäss Figur 1, jedoch mit je direkt an die Ableitung angeschlossenem, unabhängig von Bodenablauf siphoniertem Ab- und Überlauf,
- Fig. 4: Grundriss der Brunnenstube gemäss Fig. 3,
- Fig. 5: einen schematischen Vertikalschnitt durch ein erfindungsgemässes Absetzbecken, bei welchem das Wasser von aussen nach innen fliesst,
- Fig. 6: einen Horizontalschnitt durch das Absetzbecken gem. Fig. 5,
- Fig. 7: einen schematischen Vertikalschnitt durch ein Absetzbecken mit Strümpfel und daran befestigter Tauchwand,
- Fig. 8: einen Horizontalschnitt durch das Absetzbecken gem. Figur 7,
- Fig. 9: einen schematischen Vertikalschnitt durch ein Absetzbecken mit kreuzförmigem Tauchwandeinsatz und einem fest montierten Überlauf,
- Fig. 10: einen schematischen Vertikalschnitt durch ein Absetzbecken mit rohrförmiger, konisch geformter Tauchwand und asymmetrischem Ablasstrichter,
- Fig. 11: einen Horizontalschnitt durch das Absetzbecken gem. Fig. 10.

### Beschrieb der Ausführungsbeispiele

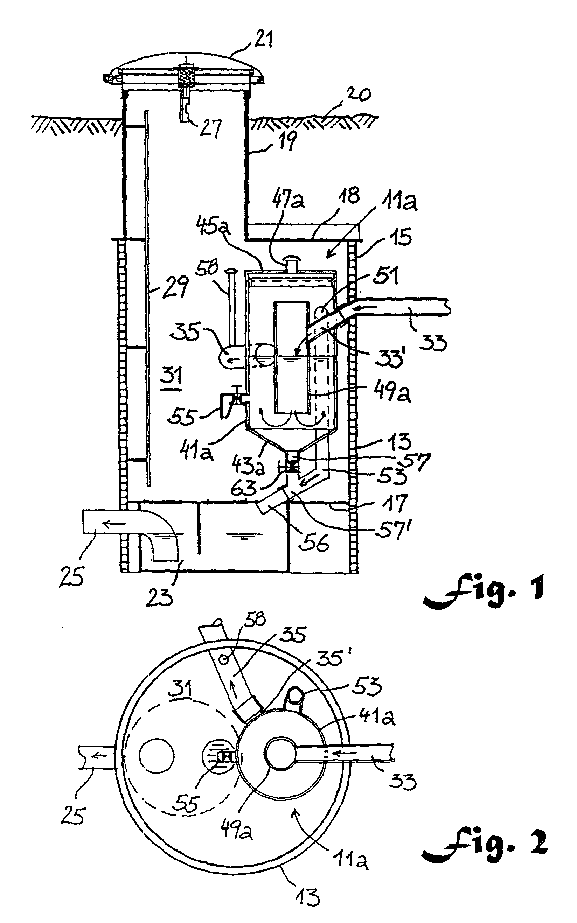

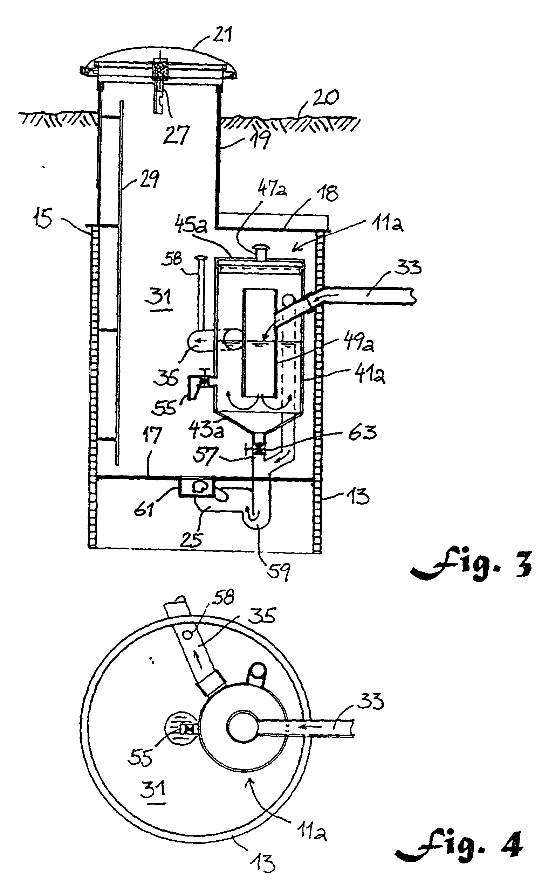

In den Figuren 1 und 2 ist eine erfindungsgemässe Brunnenstube dargestellt. Das Absetzbecken 11a ist, im Gegensatz zu den Absetzbecken bei herkömmlichen Brunnenstuben, von der Umfassungswand 13 der Brunnenstube gelöst. Ein Zwischenraum bzw. Luftraum trennt die Umfassungswand von der Beckenwand. Die Brunnenstube ist unterirdisch und weist einen, vorzugsweise wasserdichten, Baukörper 15 mit Boden 17, Umfassungswand 13, Abdeckung 18, Einstiegsschacht 19 und darauf einem über dem Erdreich 20 liegenden, verschliessbaren Deckel 21 auf. Unter dem Boden 17 der Brunnenstube ist ein siphonierter Sammelschacht 23 angeordnet, von welchem die Ableitung 25 wegführt. Der Deckel 21 ist mit einer Entlüftung versehen. Durch Luftfilter 27 und Insektengitter ist erreicht, dass keine Tiere und Pflanzensamen in die Brunnenstube eindringen. Eine Leiter 29 erleichtert den Einstieg und den Ausstieg. In dem von der vorfabrizierten Gebäudehülle 17,13,18,19,21 umhüllten Raum 31 ist ein Absetzbecken 11a angeordnet, welches ein vom Baukörper 15 unabhängiges Fertigbauteil ist.

Die Quellleitung 33 ist radial durch die Wandung 13 hindurchgeführt. Sie könnte auch tangential in das Absetzbecken hineingeführt sein. Im Innenraum 31 der Brunnenstube ist die Quellleitung 33 mit dem Einlaufstutzen oder -flansch 33' des Absetzbeckens 11a verbunden. Die Verbindung ist durch eine Muffe oder Rohrkupplung hergestellt. Ebenso ist das Absetzbecken 11a mit einem Auslaufstutzen oder -flansch 35' an der Trinkwasserleitung 35 und mit einem Entleerungsstutzen 57' am Anschlussrohr 56 an den Sammelschacht 23 angeschlossen. Die Trinkwasserleitung 35 ist mit einer Entlüftung 58 ausgerüstet.

Das Absetzbecken 11a weist eine zylindrische Behälterwandung 41a auf. Sie ist mit einem punktsymmetrischen, trichterförmigen Boden 43a versehen und weist einen Deckel 45a mit Entlüftung 47a auf. Der Deckel ist zur Entlüftung hin leicht konisch ansteigend. Wandung 41a, Boden 43a und Deckel 45a umhüllen das Absetzbecken 11a allseitig und sind vom Luftraum der Brunnenstube 31 umgeben. Im Innern dieses Behälters 11a ist konzentrisch mit der Behälterwandung 41a eine rohrförmige Tauchwand 49a angeordnet. Das Tauchwandrohr 49a könnte sehr wohl auch exzentrisch angeordnet sein. Die Tauchwand endet unten über dem oberen Rand des Trichterbodens 43a und oben mit Abstand zum Deckel, jedoch über dem Überlauf 51 in der Behälterwandung 41a. Das Quellwasser wird in das Innere des Tauchwandrohrs 49a geführt, fliesst unten um die Tauchwand 49a herum und wird auf der Aussenseite der Tauchwand 49a, einige Zentimeter tiefer als der Einlaufstutzen 33', über die Trinkwasserleitung 35 abgeleitet. Schon ein Höhenunterschied von 3 cm zwischen der Quellleitung 33' und der Trinkwasserleitung 35' genügt. In der Regel wird man den Höhenunterschied so einrichten, dass er nicht grösser als 30 cm ist. Der Überlauf 51 führt in eine Überlaufleitung 53 und in den Sammelschacht 23. Die Überlaufleitung 53 ist ausserhalb des Absetzbeckens 11a angeordnet. Weiter ist das Absetzbecken mit einem Ventil oder Schieber 55 ausgestattet, um auf einfachste Art Wasserproben und Wassermengenmessungen sowie Reinigungsarbeiten vornehmen zu können. Der Ablauf 57 ist mit einem Ventil oder Schieber 63 verschliessbar.

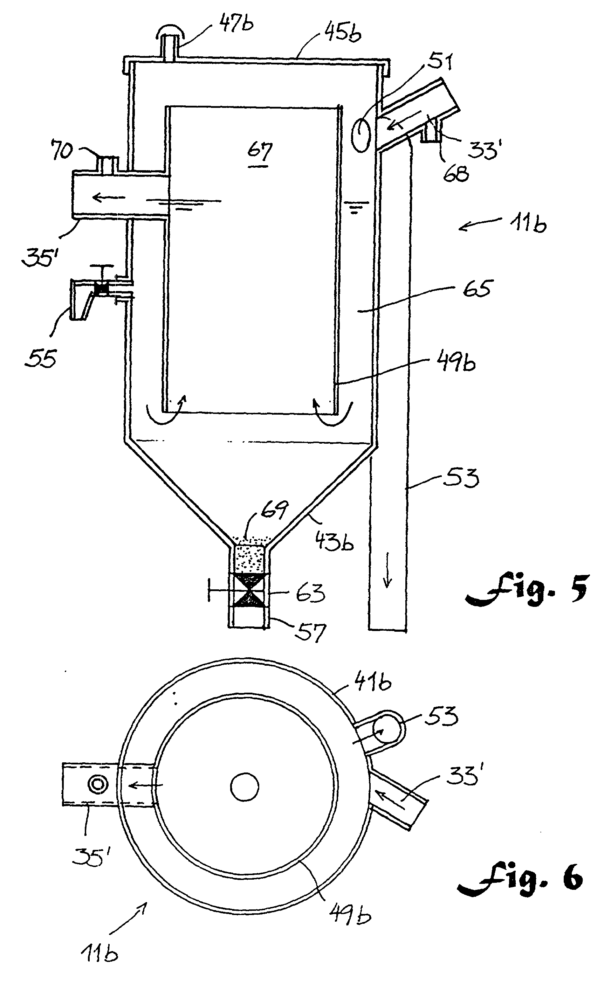

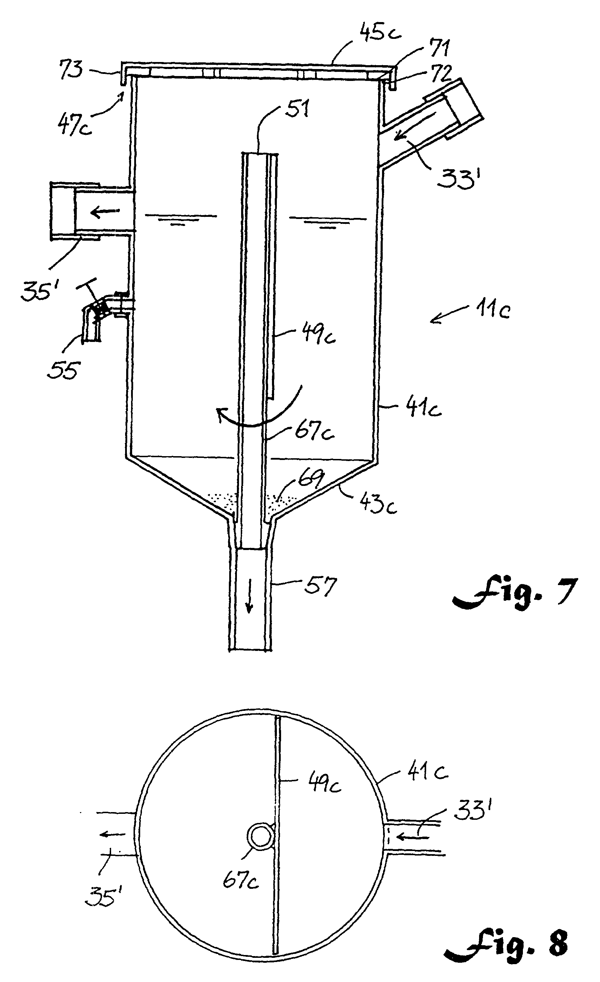

Figur 3 und 4 zeigen das gleiche Absetzbecken 11a in einer Brunnenstube 15,31, bei welcher jedoch kein Sammelschacht sondern lediglich ein Siphon 59 für die Entleerungs- und Überlaufleitung 57 des Absetzbeckens 11a und ein siphonierter Bodenablauf 61 vorgesehen ist. Der Bodenablauf 61 und die Entleerungs- und Überlaufleitung 57 sind in die Ableitung 25 geführt.

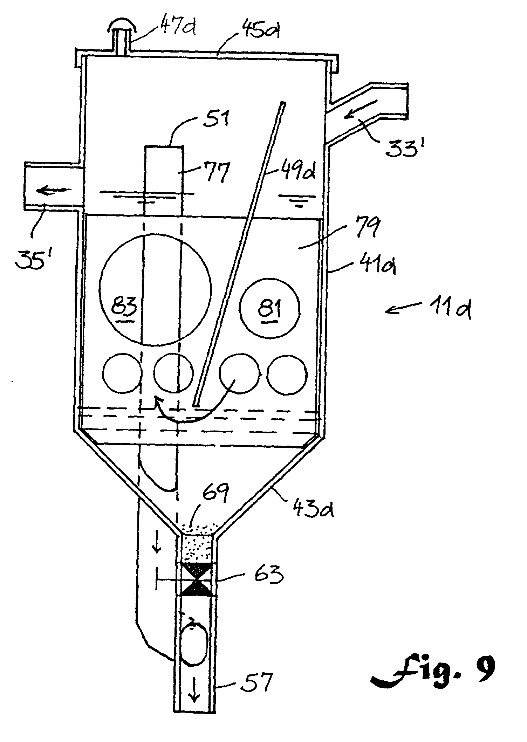

In solche oder andere Brunnenstuben 15 sind Absetzbecken 11a bis e einsetzbar. Auch alte und renovationsbedürftige Brunnenstuben eignen sich als Gebäudehülle für ein solches Absetzbecken. Figuren 5 bis 11 zeigen verschiedene Ausführungsbeispiele von Absetzbecken 11b bis e, welche sich vom Absetzbecken 11a in den Figuren 1 bis 4 unterscheiden.

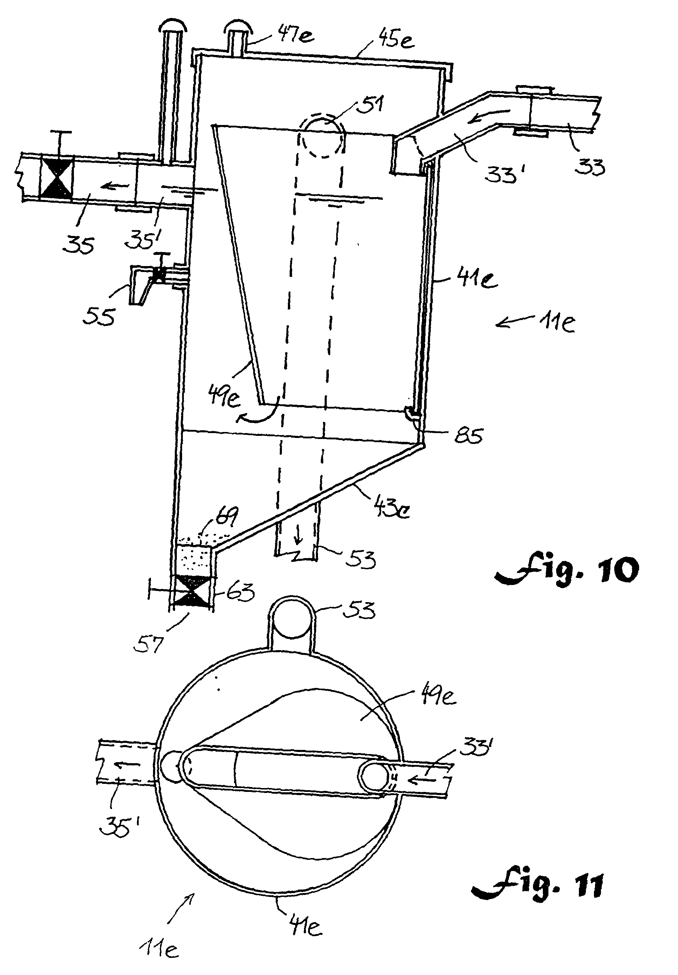

Figur 5 ist ein Vertikalschnitt durch ein Absetzbecken 11b, Figur 6 ein Horizontalschnitt dazu. Das Absetzbecken 11b weist eine zylindrische Wandung 41b, einen trichterförmigen Boden 43b und einen Deckel 45b mit Entlüftung 47b auf. In der Wandung 41b ist ein Ventil oder Schieber 55 vorgesehen. Der Ablauf 57 setzt am tiefsten Punkt des Trichterbodens 43b an. Wie im Absetzbecken 11a ist auch im Absetzbecken 11b der Ablauf 57 durch ein Ventil oder Schieber 63 dicht verschlossen.

Die Tauchwand besteht auch im Absetzbecken 11b aus einem konzentrischen Rohrstück 49b. Auch hier könnte das Tauchwandrohr exzentrisch angeordnet sein. Genau umgekehrt als beim Absetzbecken 11a wird beim Absetzbecken 11b die Quellzuleitung 33' in den Zwischenraum 65 zwischen der Tauchwand 49b und die Beckenwandung 41b eingeleitet, und das beruhigte Quellwasser aus der Mitte, aus dem Innenraum 67 des Tauchwandrohres 49b, abgeleitet. Dazu ist beim Absetzbecken 11b ein Einlaufstutzen 33' in der Wandung 41b und ein Auslaufstutzen 35' im Tauchwandrohr 49b vorgesehen. Der Auslaufstutzen 35' ist radial durch die Wandung 41b hindurchgeführt. Der Einlaufstutzen 33' tritt in einem Winkel zur radialen Richtung durch die Wandung 41b hindurch, so dass das einlaufende Quellwasser das im Absetzbecken 11b vorliegende Quellwasser in Drehung versetzt. Durch die Drehbewegung ist der Weg des Wassers um die Tauschwand herum länger und die Schwebeteilchen werden durch die Zentrifugalkraft nach aussen gedrängt. Das schwebeteilchenarme Wasser steigt in der Mitte auf.

Beim Einlaufstutzen 33' ist ein nach unten gerichteter Stutzen oder Flansch 68 mit wenigstens 2 Zoll Durchmesser vorgesehen, welches als Anschluss für ein Entnahmeröhrchen für Trübungsmessungen dient. Beim Auslaufstutzen 35' ist nach oben ein Stutzen oder Flansch 70 mit ebenfalls wenigstens 2 Zoll Durchmesser vorgesehen, an welchem eine Entlüftung angeschlossen werden kann.

Ein Überlauf 51 ist etwa auf der Höhe des Quelleinlaufs 33' in der Beckenwandung 41b angeordnet und das Überlaufrohr 53 ausserhalb der Beckenwandung in die Anschlussleitung zum Siphon der Ableitung 25 geführt. Vorteilhaft ist der Überlauf 51 tiefer als das Einlaufrohr 33 angeordnet, so dass kein Rückstau in das Einlaufrohr bzw. die Quellfassung entstehen kann.

Eine zu den ersten zwei Ausführungsbeispielen 11a,b mit rohrförmiger Tauchwand 49a,b alternative Ausbildung des Absetzbeckens ist in Figur 7 und 8 dargestellt. Dieses weist zwar wieder eine zylindrische Wandung 41c, einen trichterförmigen Boden 43c, einen entlüfteten Deckel 45c und ein Ventil oder einen Schieber 55 auf. Wieder ist ein Ablauf 57 am tiefsten Punkt des Trichterbodens 43c angeordnet und ein Einlaufstutzen 33' und ein Auslaufstutzen 35' vorgesehen. Jedoch ist der Ablauf 57 mit einem Strümpfel 67c verschlossen und durch Ziehen des Strümpfels 67c das Absetzbecken 11c entleerbar. Am Strümpfel ist eine ebenflächige Tauchwand 49c befestigt, welche das Absetzbecken in zwei praktisch gleich grosse Abteile unterteilt. Aus herstellungstechnischen Gründen ist es einfacher, die Tauchwand einseitig am Strümpfel anzuordnen. Die Tauchwand kann dabei fest mit dem Strümpfel verbunden sein oder als unabhängiges Teil lose eingesetzt sein. Durch die einseitige Anordnung der Tauchwand ist das eine Abteil kleiner als das andere. Das kleinere ist mit Vorteil auf der Einlaufseite, das grössere auf der Auslaufseite angeordnet, damit die Schwebeteile sich besser absetzen.

Die Schwebeteile 69 setzen sich am Boden zu einem Sediment ab, hauptsächlich um den tiefsten Punkt herum. Durch die starke Neigung des Trichterbodens 43 sinken die Schwebeteile vorwiegend in den Bereich des Ablaufs ab. Dort entsteht beim Entleeren des Beckens 11c ein starker Wassersog, so dass das Sediment 69 durch die Wasserkraft ausgeschwemmt wird.

Die Entlüftung 47a-e des Beckens 11a-e kann durch ein Rohr mit Haube, siehe Figuren 1,3 und 5 geschehen. Eine sehr einfache Variante dazu ist in der Figur 7 dargestellt, wo der Deckel mit Abstandhaltern 71 auf den oberen Rand 72 der Beckenwandung 41c aufgesetzt ist und ein Rand 73 des Deckels 45c mit Abstand zum oberen Rand 72 über diesen hinunterreicht.

Figur 9 zeigt eine weitere Möglichkeit einer Ausgestaltung eines Absetzbeckens 11d. Der Überlauf 51 ist durch ein fest montiertes Rohr 77 im Innern des Beckens gebildet. Die Tauchwand 49d wird durch eine geneigte Scheibe, welche von einer gelochten Querwand 79 getragen ist, geformt. Die Querwand 79 und die geneigte Scheibe 49d können lediglich in das Becken 11d hineingestellt sein, was eine einfache Demontage für Reinigungszwecke erlaubt.

Die Neigung der Tauchwand 49d bewirkt, dass der Querschnitt der Abteile 81,83 des Absetzbeckens 11d in Fliessrichtung des Wassers konstant zunimmt. Dadurch nimmt die Fliessgeschwindigkeit des Wassers mehr und mehr ab, was zur Beruhigung des Wassers dient und einem Absetzen der Schwebeteile 69 förderlich ist.

Derselbe Effekt wird im Ausführungsbeispiel gemäss Fig. 10 und 11 durch eine an ihrem oberen Ende flachgedrückte, rohrförmige Tauchwand erreicht. Der Flussquerschnitt ist im Innern des Tauchwandrohres umso grösser, je näher er an dem unteren, kreisrunden Ende der Tauchwand 49e liegt, und entsprechend ist der Flussquerschnitt ausserhalb des Tauchwandrohres 49e umso grösser, je näher er dem oberen, flachgepressten Ende des Tauchwandrohres liegt. Das Tauchwandrohr braucht auch nicht zentrisch im Becken angeordnet sein. Aus der Figur 10 und 11 ist deutlich, dass das Tauchwandrohr 49e einlaufseitig linear an der Beckenwandung 41e anliegt. Das Tauchwandrohr 49e ist unten in einen Haken 85 und oben in den Einlaufstutzen 33' eingehängt. Durch Anheben und anschliessend unten Ausscheren ist das Tauchwandrohr aushängbar.

Weiter ist aus diesem Beispiel auch deutlich, dass der Trichterboden 43a-e nicht punktsymmetrisch sein muss. Der Auslauf 57 ist beim Absetzbecken 11e exzentrisch angeordnet. Dadurch ist das Ventil oder der Schieber 63 besser zugänglich.

Zusammenfassend kann gesagt werden, dass bei einer Brunnenstube das oder die Absetzbecken erfindungsgemäss von der Baumeister- oder Spezial-Konstruktion der Brunnenstuben-Umfassungswandung oder -Gebäudehülle gelöst sind. Ein Absetzbecken bildet eine mit entsprechenden Stutzen an den Quellzulauf und die Trinkwasserableitung anschliessbare Einbaueinheit. Diese wird werkseitig, z.B. vom Sanitärinstallateur, hergestellt und auf der Baustelle versetzt. Sie ist vorteilhaft durch einen Behälter gebildet, welcher einen Trichterboden aufweist, ist zweckmässigerweise gedeckt und entlüftet, und weist ein Ventil oder einen Schieber zur Probenentnahme auf. Das Absetzbecken ist weiter mit einer Tauchwand und einem Überlauf versehen. Wenn auch Überlauf und Ablauf mit Vorteil direkt an eine siphonierte Ableitung angeschlossen werden, können sie auch auf den Boden der Brunnenstube führen, von wo das Wasser über einen siphonierten Bodenablauf und eine Ablaufleitung dem Vorfluter zugeleitet wird.

Die Absetzbecken müssen nicht, wie durchwegs dargestellt, vertikal ausgerichtete Körper sein. Die Becken können auch horizontal ausgerichtet sein, oder gar geneigt. Bei geneigter Anordnung hilft die Neigung der Wandung, ähnlich wie die Neigung des Trichterbodens, zum Sammeln eines allfälligen Sediments.

Die Erfindung ist nicht auf die angeführten Beispiele limitiert.

## Patentansprüche

1. Brunnenstube mit einer Gebäudehülle (15) und einer Öffnung darin als Zugang zur Brunnenstube, und in der Brunnenstube einem Trockenraum (31) und mit wenigstens einem Absetzbecken (11a-e),welches Absetzbecken(11a-e)eine Wandung (41a-e), einen Boden (43a-e) und einen Ablauf (57) und einer siphonierten Ableitung, z.B. zur Ableitung von trübern oder überschüssigern Quellwasser aufweist und mit einer Tauchwand (49a-49e) in ein erstes und ein zweites Abteil unterteilt ist, welche Abteile entlüftet sind,
**dadurch gekennzeichnet, dass** das Absetzbecken (11a-e) ein von der Gebäudehülle (15) unabhängiges Einbauteil ist, und in der Wandung (41a-e) einen Anschlussstutzen (33') für eien Ansschluss an einen Quellzulauf (33),
und einen Auslaufstutzen (35') zum Anschluss an eine Trinkwasserleitung (35) aufweist, und dass das Absetzbecken allseitig mit einem Luftraum von der Umfassungswand (13) der Gebäudehülle (15) gelöst ist.

2. Brunnenstube nach Anspruch 1, **dadurch gekennzeichnet, dass** das Absetzbecken einen Deckel (45a-e) und eine Entlüftung (47a-e) im Deckel aufweist.

3. Brunnenstube nach Anspruch 1 oder 2, **dadurch gekennzeichnet, dass** das Absetzbeckens (11a-e) bzw. die Wandung (41a-e) des Absetzbecken zylindrisch ist.

4. Brunnenstube nach einem der Ansprüche 1 bis 3, **dadurch gekennzeichnet, dass** das Absetzbecken einen trichterförmigen Boden (43a-e) mit einem Ablauf (57) am tiefsten Punkt des Trichterbodens (43a-e) besitzt.

5. Brunnenstube nach Anspruch 4, **dadurch gekennzeichnet, dass** ein Ventil oder Schieber (63) am Ablauf (57) des Absetzbeckens vorhanden ist, um diesen zu verschliessen oder zu öffnen.

6. Brunnenstube nach einem der vorangehenden Ansprüche, **dadurch gekennzeichnet, dass** in der Wandung (41a-e)am Absetzbecken ein Ventil oder einen Schieber (55) zum Auslassen von Quellwasser aus dem Absetzbecken vorhanden ist.

7. Brunnenstube nach Anspruch 6, **dadurch gekennzeichnet, dass** das Volumen des Absetzbeckens (11a-c,e)unter dem Ventil oder Schieber (55) geeicht ist.

8. Brunnenstube nach einem der vorangehenden Ansprüche, **dadurch gekennzeichnet, dass** die Tauchwand (49a-e) durch ein Rohr (49a,b,e) mit etwa vertikaler Achse im Innern des Absetzbecken gebildet ist.

9. Brunnenstube nach einem der vorangehenden Ansprüche, **dadurch gekennzeichnet, dass** am Einlaufstutzen (33') für das Quellwasser ein Rohrstutzen (68) zum Anschluss eines Entnahmeröhrchens, z.B. für Trübungsmessungen, vorgesehen ist.

10. Verwendung eines von einer Gebäudehülle (15) unabhängig ausgebildetes Absetzbeckens (11a-11e), welches eine Wandung (41a-e), in der Wandung einen Anschlussstutzen (33') und einen Auslaufstutzen (35'), einen Boden (43a-e) und einen Ablauf (57) besitzt,und mit einer Tauchwand in ein erstes und ein zweites Abteil unterteilt ist, welche Abteile entlüftet sind, als ein an einen Quellzulauf (33) und an eine Trinkwasserleitung (35) angeschlossenes Einbauteil (11a-11e) in einer Brunnenstuben einer Quellfassung.

## Claims

1. A well chamber with a structure casing (15) and with an opening therein as an access to the well chamber, and with a dry space (31) in the well chamber, and with at least one sedimentation basin (11a-e), said sedimentation basin (11a-e) comprising a wall (41a-e), a bottom (43a-e), a discharge (57) and a siphonised drainage, e.g. for draining sedimented or excess well water, and with a immersed wall (49a-49e) is divided into a first and second compartment, said compartments being bled, **characterised in that** the sedimentation basin (11a-e) is an installation part which is independent of the structure casing (15), and in the wall (41a-e) comprises a connection union (33') for a connection to a well supply (33) and a runout union (35') for the connection to a drinking water conduit (35), and that the sedimentation basin on all sides is detached from the containing wall (13) of the structure casing (15) with an air space.

2. A well chamber according to claim 1, **characterised in that** the sedimentation basin comprises a lid (45a-e) and an air-bleed (47a-e) in the lid.

3. A well chamber according to claim 1 and 2, **characterised in that** the sedimentation basin (11a-e) or the wall (41a-e) of the sedimentation basin is cylindrical.

4. A well chamber according to one of the claims 1 to 3, **characterised in that** the sedimentation basin has a funnel-like bottom (43a-e) with a discharge (57) at the lowest point of the funnel bottom (43a-e).

5. A well chamber according to claim 4, **characterised in that** a valve or slide (63) is present on the discharge (57) of the sedimentation basin in order to close or open this.

6. A well chamber according to one of the preceding claims, **characterised in that** a valve or a slide (55) for letting well water out of the sedimentation basin is present in the wall (41 a-e) on the sedimentation basin.

7. A well chamber according to claim 6, **characterised in that** the volume of the sedimentation basin (11a-c,e) below the valve or slide (55) is calibrated.

8. A well chamber according to one of the preceding claims, **characterised in that** the immersed wall (49a-e) is formed by a pipe (tube) (49a,b,e) with a roughly vertical axis in the inside of the sedimentation basin.

9. A well chamber according to one of the preceding claims, **characterised in that** a tube union (68) for the connection of a removal pipe, e.g. for measuring the turbidity, is provided on the inlet union (33') for the well water.

10. The use of a sedimentation basin (11a-11e) which is designed independently of a structure casing (15) and which comprises a wall (41 a-e), a connection union (33') and a runout union (35') in the wall, a bottom (43a-e) and a discharge (57), and with an immersed wall is divided into a first and into a second compartment, said compartments being bled, as an installation part (11a-11e) in a well chamber of a well housing, said installation part being connected to a well supply (33) and to a drinking water conduit (35).

## Revendications

1. Salle de captation avec une enveloppe de bâtiment (15) et une ouverture à l'intérieur comme accès à la salle de captation et un espace sec (31) dans la salle de captation et avec au moins un bassin de décantation (11 a-e), lequel bassin de décantation (11a-e) a une paroi (41 a-e), un fond (43 a-e) et une évacuation (57) et une dérivation avec siphon, par exemple pour la dérivation d'eau de source trouble ou excédentaire, et est divisé avec une paroi plongeuse (49a-49e) en un premier et en un second compartiment, lesquels compartiments sont ventilés, **caractérisée en ce que** le bassin de décantation (11 a-e) est une pièce encastrée indépendante de l'enveloppe du bâtiment (15) et présente dans la paroi (41 a-e) une tubulure de raccord (33') pour un raccord à une arrivée de source (33) et une tubulure de sortie (35') pour le raccord à une conduite d'eau potable (35) et que le bassin de décantation est détaché de la paroi d'enceinte (13) de l'enveloppe du bâtiment (15) de tous les côtés avec un espace d'air.

2. Salle de captation selon la revendication 1, **caractérisée en ce que** le bassin de décantation présente un couvercle (45 a-e) et une aération (47a-e) dans le couvercle.

3. Salle de captation selon la revendication 1 ou 2, **caractérisée en ce que** le bassin de décantation (11 a-e) ou la paroi (41 a-e) du bassin de décantation est cylindrique.

4. Salle de captation selon l'une des revendications 1 à 3, **caractérisée en ce que** le bassin de décantation possède un fond en forme d'entonnoir (43 a-e) avec une évacuation (57) au point le plus bas du fond de l'entonnoir (43 a-e).

5. Salle de captation selon la revendication 4, **caractérisée en ce qu'**il existe une vanne ou un robinet-vanne (63) sur l'évacuation (57) du bassin de décantation pour le fermer ou l'ouvrir.

6. Salle de captation selon l'une des revendications précédentes, **caractérisée en ce qu'**il existe une vanne ou un robinet-vanne (55) dans la paroi (41 a-e) sur le bassin de décantation pour laisser s'écouler de l'eau de source à partir du bassin de décantation.

7. Salle de captation selon la revendication 6, **caractérisée en ce que** le volume du bassin de décantation (11 a-c, e) sous la vanne ou le robinet-vanne (55) est étalonné.

8. Salle de captation selon l'une des revendications précédentes, **caractérisée en ce que** la paroi plongeuse (49 a-e) est formée par un tube (49 a, b, e) avec un axe approximativement vertical dans l'intérieur du bassin de décantation.

9. Salle de captation selon l'une des revendications précédentes, **caractérisée en ce qu'**il est prévu une tubulure (68) pour le raccord d'un petit tube de prélèvement, par exemple pour des mesures de turbidité, sur la tubulure d'entrée (33') pour l'eau de source.

10. Utilisation d'un bassin de décantation (11a-11e) configuré indépendamment d'une enveloppe de bâtiment (15), bassin qui possède une paroi (41 a-e), une tubulure de raccord (33') dans la paroi et une tubulure de sortie (35'), un fond (43 a-e) et une évacuation (57) et qui est divisé avec une paroi plongeuse en un premier et en un second compartiment, lesquels compartiments sont ventilés, en tant que pièce encastrée (11a-11e) raccordée à une alimentation de source (33) et à une conduite d'eau potable (35) dans une salle de captation d'un captage de source.
